Europäisches Patentamt

European Patent Office

Office européen des brevets

(19)

(11) Veröffentlichungsnummer: **0 245 693 B1**

(12) # EUROPÄISCHE PATENTSCHRIFT

(45) Veröffentlichungstag der Patentschrift:
**18.09.91 Patentblatt 91/38**

(51) Int. Cl.$^5$: **A61C 9/00**, A61C 13/34

(21) Anmeldenummer: **87106140.4**

(22) Anmeldetag: **28.04.87**

(54) Sockel für ein Gebissmodell und Verfahren zur Herstellung eines Gebissmodells.

(30) Priorität: **10.05.86 DE 3615821**

(43) Veröffentlichungstag der Anmeldung:
**19.11.87 Patentblatt 87/47**

(45) Bekanntmachung des Hinweises auf die
Patenterteilung:
**18.09.91 Patentblatt 91/38**

(84) Benannte Vertragsstaaten:
**AT CH DE FR LI**

(56) Entgegenhaltungen:
**EP-A- 0 116 163**
**DE-A- 3 505 680**
**DE-C- 2 856 963**
**US-A- 4 119 292**

(73) Patentinhaber: **Zeiser, Manfred P.Dr.**
**Im Wolfsgalgen 8**
**W-7141 Schwieberdingen (DE)**

(72) Erfinder: **Zeiser, Manfred P.Dr.**
**Im Wolfsgalgen 8**
**W-7141 Schwieberdingen (DE)**

## Beschreibung

Die Erfindung bezieht sich auf einen Sockel für ein Gebißmodell zur Anfertigung von Zahnersatzteilen gemäß den Merkmalen des Oberbegriffs des Anspruchs 1.

Ein solcher Sockel ist beispielsweise aus der DE-PS 28 56 963 bekannt. Bei dieser Ausführung besteht der Sockel aus einem zungenseitigen und einem wangenseitigen Sockelabschnitt, wobei die beiden Sockelabschnitte über mehrere Stege miteinander verbunden sind. Die Sockelabschnitte haben zueinander ausgerichtete Seitenwände, die eine zahnbogenförmige Nut seitlich begrenzen und die an einem Führungsansatz eines Modellzahnstumpfes während der Aushärtung des Modellwerkstoffes Führungsflächen bilden. Die Sockelabschnitte einschließlich der Stege sind einstückig aus einem verformungssteifen Kunststoff ausgebildet. Der Abstand zwischen der wangenseitigen Seitenwand und der zungenseitigen Seitenwand ist dabei durch die Stege, die die Seitenwände auf dem kürzesten Abstand miteinander verbinden, fest und unveränderbar festgelegt.

Untersuchungen haben ergeben, daß unter Verwendung eines solchen Sockels hergestellte Gebißmodelle bzw. die danach angefertigten Zahnersatzteile hinsichtlich der Genauigkeit nicht allen Anforderungen entsprechen. Messungen mit dem Mikroskop haben gezeigt, daß bei Gipsmodellen die einzelnen Modellzahnstümpfe nach dem Zersägen nicht mehr in die ursprüngliche Position in den Sockel zurückgesetzt werden können. Gips expandiert nämlich während der Aushärtung, wobei sich vor allem die Expansion quer zur Zahnbogenlängsrichtung nachteilig auswirkt, während die Expansion in Zahnbogenlängsrichtung im wesentlichen durch den Sägespalt ausgeglichen wird, insbesondere wenn der Zahnbogen in viele einzelne Abschnitte aufgeteilt wird. Durch die Expansion der einzelnen Zahnstümpfe quer zur Zahnbogenlängsrichtung vergrößert sich der Abstand zwischen den beiden Führungsflächen, sodaß die einzelnen Sägeabschnitte oder Modellzahnstümpfe später nicht mehr in der richtigen Höhenbeziehung zueinander in die Nut, die sich bei der bekannten Ausführung konisch erweitert, eingesetzt werden können, denn der Abstand der diese Nut begrenzenden Seitenwände bleibt wegen der Verwendung eines formstabilen Kunststoffes unverändert, ist also kleiner als der Abstand der Führungsflächen nach der Aushärtung des Modellwerkstoffes.

Um diesen Nachteil einer unkorrekten Höhenbeziehung zwischen einzelnen Zahnstümpfen zu beheben, wird der Zahnstumpf oft mit erheblichem Kraftaufwand in die Nut hineingedrückt, was bei Frontzahnabschnitten wegen des geringeren Volumens und damit auch der geringeren Expansion leichter möglich ist als bei Sägeabschnitten im Backenzahnbereich. Dies führt aber in aller Regel zur Deformation des Modellzahnstumpfes, die nicht so ohne weiteres am Gesamtmodell erkennbar ist, jedoch die Genauigkeit des Zahnersatzteiles erheblich beeinträchtigen kann.

Insgesamt ist also festzustellen, daß bei Verwendung des bekannten Sockels zwar eine spielfreie Führung der einzelnen Zahnstümpfe im Sockel erreichbar ist, daß aber wegen der ungenügenden Berücksichtigung der Expansion des Modellwerkstoffes die genaue Ausgangsposition bzw. die Reposition der einzelnen Zahnstümpfe nicht gewährleistet werden kann.

Der vorliegenden Erfindung liegt daher die Aufgabe zugrunde, einen Sockel der genannten Art derart zu verbessern, daß auch bei einer starken Expansion des Modellwerkstoffes die einzelnen Zahnstümpfe nach dem Zersägen eines Modellzahnbogens wieder original in ihre ursprüngliche Position zurückgesetzt werden können.

Diese Aufgabe wird erfindungsgemäß mit den kennzeichnenden Merkmalen des Anspruchs 1 gelöst.

Der Erfindung liegt dabei die Erkenntnis zugrunde, daß diese Expansion des Modellwerkstoffes auch bei Verwendung eines formstabilen Werkstoffes für den Sockel nicht vermieden oder wesentlich begrenzt werden kann. Die Erfindung basiert deshalb auf dem Gedanken, daß sich die Sockelform der Expansion des Modellwerkstoffes anpassen sollte. Dies ist möglich, wenn man das oder die Verbindungselemente zwischen den beiden Sockelabschnitten so ausbildet, daß eine Abstandsveränderung zwischen wangenseitiger und zungenseitiger Seitenwand möglich ist. Im Gegensatz zu den bisherigen Bestrebungen, die auf einen möglichst formgetreuen Sockel abzielten, soll also erfindungsgemäß wenigstens eine der beiden Seitenwände gewissermaßen nachgiebig ausgebildet werden.

Der Grundgedanke der Erfindung kann auf unterschiedliche Weise realisiert werden. Prinzipiell könnte man den wangenseitigen Sockelabschnitt in einzelne Segmente unterteilen, die dann über radial gerichtete Führungselemente am inneren oder zungenseitigen Sockelabschnitt frei beweglich radial geführt sind. Eine solche mehrteilige Sockelausführung ist aber in der Herstellung verhältnismäßig kostspielig, zumal man über zusätzliche Anschläge oder ähnliches die Endpositionen des verstellbaren Sockelabschnittes festlegen müßte.

Deshalb wird einer Ausführung der Vorzug gegeben, bei der das Verbindungselement einer Abstandsvergrößerung zwischen wangenseitiger und zungenseitiger Seitenwand elastisch entgegenwirkt. Bei einer solchen Ausführung soll sich also dieser Abstand bzw. die Nutbreite kontinuierlich mit der Expansion des Modellwerkstoffes vergrößern, sodaß jederzeit eine exakte Anlage dieser Seitenwände an den Führungsflächen der Modellzahnstumpfes gegeben ist.

Den Mindestabstand zwischen den beiden Seitenwänden, also die Nutbreite vor dem Einfüllen des Modellwerkstoffes kann man dabei durch Distanzelemente vorgeben. Bei einer besonders bevorzugten Ausführung kann dabei das Verbindungselement zugleich als Distanzelement wirken, was den Aufbau des Sockels vereinfacht. Dies ist möglich, wenn man gemäß den Merkmalen des Anspruchs 5 das Verbindungselement - wie an sich bekannt - als Steg ausbildet, aber diesen Steg unter einem Winkel ungleich 90 Grad an den Sockelabschnitten anlenkt. Die Länge dieser Stege ist also größer als die ursprüngliche Mindestnutbreite. Bei einer Expansion des Modellwerkstoffes verändert sich dann dieser Stegwinkel, was zu einer Vergrößerung der Nutbreite führt.

Basierend auf dieser Überlegung kann man einen einstückigen Sockel kostengünstig herstellen, wenn man den Steg beidseitig über ein Filmscharniergelenk an die Sockelabschnitte anformt. Durch das Filmscharniergelenk ist dabei eine bestimmte Vorzugslage des Steges definiert, die den Mindestabstand zwischen den beiden Seitenwänden bestimmt.

Besonders bevorzugt wird eine Ausführung, bei der die Stege in ihrem mittleren Abschnitt einen verminderten Querschnitt aufweisen, sodaß eine gewisse Flexibilität der Stege quer zur Zahnbogenlängsrichtung gegeben ist, der wangenseitige Sockelabschnitt aber dennoch ausreichend formstabil gehalten ist.

Bei einem Sockel für einen vollständigen Zahnbogen wird man mehrere Stege vorsehen, die vorzugsweise alle auf einen gemeinsamen Verbindungspunkt hin ausgerichtet sind. Wenn dieser Punkt in der Mitte hinter beiden Schneidezähnen liegt, wird bei der Expansion des Modellwerkstoffes der wangenseitige Sockelabschnitt gleichmäßig nach außen gedrückt. Der wangenseitige Sockelabschnitt wird also über mehrere im Abstand voneinander angeordnete Stege federelastisch gehalten, die über den gesamten Zahnbogenumfang vorzugsweise gleichmäßig verteilt angeordnet sind.

Natürlich sind auch andere Steganordnungen möglich. Beispielsweise könnten die Stege alle parallel zueinander angeordnet sein, sodaß eine Art Parallelogrammführung für den wangenseitigen Sockelabschnitt realisiert ist. Diese Ausführung eignet sich besonders, wenn dieser wangenseitige Sockelabschnitt in mehrere Segmente unterteilt ist. Die einzelnen Stege könnten auch nach dem Prinzip einer Nürnberger Schere den wangenseitigen Sockelabschnitt mit dem zungenseitigen Sockelabschnitt verbinden. Zur Stabilitätserhöhung könnten auch einzelne oder alle Stege über einen in der Mitte längs der Nut verlaufenden Versteifungssteg miteinander verbunden sein.

Für die Stege könnte auch ein Werkstoff verwendet werden, der selbst die erforderliche Elastizität aufweist. Die Stege wären in diesem Fall also in ihrer Längsrichtung federelastisch und könnten wie bei der bekannten Ausführung die Nut auf dem kürzesten Weg überbrücken.

Insgesamt kann durch geeignete Werkstoffauswahl und Dimensionierung der Stege sichergestellt werden, daß eine elastische Abstandsveränderung zwischen den beiden Führungswänden für den Ansatz am Modellzahnstumpf erreicht wird. Da der translatorischen Verschiebung der wangenseitigen Seitenwand eine gewisse Rotationsbewegung überlagert ist, muß man die Vorsprünge in der wangenseitigen Seitenwand derart festlegen, daß die Bewegung dieser Seitenwand nicht gehemmt wird. Dies wird durch eine besondere Formgebung der Vorsprünge entsprechend den Merkmalen nach Anspruch 29 erreicht.

Bei geeigneter Abstimmung der Elastizität der Verbindungselemente zwischen den beiden Sockelabschnitten auf die auftretende Expansion könnte ein solcher Sockel möglicherweise ohne zusätzliche Elemente verwendet werden. Allerdings bereitet eine solche Abstimmung Schwierigkeiten, zumal die Expansion vom verwendeten Werkstoff und der Aushärtdauer abhängt. Es kann daher nicht völlig ausgeschlossen werden, daß bei der Ausarbeitung des Zahnersatzteiles Lageverschiebungen einzelner Zahnstümpfe auftreten.

Gemäß einer besonders bevorzugten Weiterbildung der Erfindung sollen zur Behebung dieses Nachteils die beiden Sockelabschnitte miteinander verriegelbar sein. Während der Ausarbeitung des Zahnersatzteiles entspricht dann die Stabilität des Sockels derjenigen der bekannten Ausführung und die einzelnen Zahnstümpfe sind stabil in dem Sockel verankert. Während der Aushärtung des Modellwerkstoffes kann sich die wangenseitige Seitenwand aber dennoch entsprechend der Expansion nach außen verlagern, sodaß die Entnahme des Modellzahnbogens und das Zurücksetzen der zersägten Zahnstümpfe ohne großen Kraftaufwand möglich ist. Auch bei einer teilweisen oder vollständigen Aushärtung des Modellzahnbogens außerhalb des Sockels wird das Zurücksetzen der einzelnen Zahnstümpfe erleichtert. Gerade diese Merkmalskombination einer verschiebbaren bzw. elastisch auslenkbaren, aber dennoch formstabil verriegelbaren Seitenwand am Sockel wird eine besondere Bedeutung beigemessen, weil damit optimale Ergebnisse erzielbar sind.

Die Verriegelung zwischen den beiden Sockelabschnitten kann auf unterschiedliche Arten realisiert werden. Man kann z. B. eine formschlüssige Verriegelung vorsehen, indem man eine wannenartige Form mit konisch zulaufenden Seitenwänden verwendet und in diese Form unter Ausnutzung der Keilwirkung den mit den Modellzahnstümpfen bestückten Sockel derart einsetzt, daß die Außenwand des wangenseitigen Sockelabschnittes an der Seitenwand der Form anliegt.

Bevorzugt werden aber Ausführungen mit einer gegenseitigen Verspannung der beiden Sockelabschnitte. Dazu kann man eine Spange mit ausreichender Spannkraft verwenden, die die freien Enden des wangenseitigen Sockelabschnittes gegeneinander spannt. Eine solche Ausführung wird man verwenden, wenn ein kompletter Zahnbogen abgeformt und ausgearbeitet werden soll. Insbesondere für Arbeiten auf nur einer Zahnseite kann man zwei Spangen verwenden, die jeweils ein freies Ende des wangenseitigen Sockelabschnittes mit dem zungenseitigen Sockelabschnitt verspannen. Dabei können diese beiden Spangen durchaus einstückig, beispielsweise über ein Filmscharniergelenk miteinander verbunden sein.

Bevorzugt werden also die freien Enden des wangenseitigen Sockelabschnittes im Backenzahnbereich gegeneinander gespannt, wobei sich ein gleichmäßiger Zug über den gesamten Umfang einstellt, der sich gleichmäßig auf die einzelnen Modellzahnstümpfe überträgt und diese sicher und ohne zusätzliche Riegelelemente in dem Sockel hält. Der wangenseitige Sockelabschnitt kann dann einstückig ausgebildet sein.

Man kann diesen Sockelabschnitt aber auch im Frontzahnbereich unterteilen und dann eine Spange vom Frontzahnbereich her ansetzen. Denkbar wären auch Ausführungen mit einem mehrfach unterteilten Sockelabschnitt, wobei dann jeder Teilbereich mit dem benachbarten Teilbereich über eine Spange verspannt wird. In Weiterbildung dieses Gedankens kann man anstelle einer oder mehrerer Spangen auch ein Spannband verwenden, das um den wangenseitigen Sockelabschnitt umlaufend verspannt wird.

Schließlich kann man anstelle einer Spange auch eine Schraubverbindung verwenden, mit der die freien Enden des wangenseitigen Sockelabschnittes gegeneinander oder mit den benachbarten Bereichen des zungenseitigen Sockelabschnittes individuell verspannt werden.

Wenn die beiden Sockelabschnitte nur über verhältnismäßig dünne Stege miteinander verbunden sind, sollte man für eine gegenseitige Ausrichtung bzw. Fluchtung dieser beiden Sockelabschnitte quer zu deren Grundfläche sorgen. Dazu kann man die Spangen, das Spannband oder auch die Schraubverbindung unmittelbar ausnutzen. Beispielsweise kann man in die Außenwand der Sockelabschnitte eine Nut einarbeiten, in dann diese Teile passend eingreifen.

Ein alle Anforderungen in optimaler Weise erfüllender Sockel hat zwei am zungenseitigen Sockelabschnitt über je eine Rastverbindung angelenkte Spangen, die in einer Nut dieses Sockelabschnittes geführt sind. Von dieser Spange steht senkrecht eine Platte ab, die einen Vorsprung trägt, der passend in eine Nut am wangenseitigen Sockelabschnitt hineingreift. Damit wird also eine lagerichtige Ausrichtung der beiden Sockelabschnitte quer zu deren Grundfläche gewährleistet. Diese Platte ragt dabei in den Spalt zwischen den beiden Sockelabschnitten hinein und schließt damit gewissermaßen die Nut in Umfangsrichtung. Durch diese speziell ausgebildete Spange werden also unterschiedliche Funktionen ohne großen Aufwand erfüllt.

Der Sockel wird vorzugsweise einstückig aus Kunstsoff gespritzt. Die Seitenwände der Sockelabschnitte sollen dabei - abgesehen von der geringen, aus spritztechnischen Gründen notwendigen Entformungsschräge - parallel zueinander und senkrecht zur Grundfläche der Sockelabschnitte ausgerichtet sein. Dies ist im Gesensatz zu der bekannten Ausführung möglich, weil aufgrund der Auslenkung einer Seitenwand ein Herausziehen bzw. Zurücksetzen des Modellzahnbogens oder einzelner Modellzahnstümpfe ohne wesentlichen Kraftaufwand möglich ist, da die Expansion nicht zu einem verstärkten Pressitz führt. Dabei ist insbesondere auch zu berücksichtigen, daß wegen der Verbindung der beiden Sockelabschnitte nahe der Nutgrundfläche eine konischen Verformung der wangenseitigem Seitenwand möglich ist.

Die vorliegende Erfindung bezieht sich außerdem auf ein Verfahren zur Herstellung eines Gebißmodells, dessen wesentlicher Verfahrensschritt darin zu sehen ist, daß zumindest während eines bestimmten Zeitabschnittes während der Aushärtdauer des Modellwerkstoffes eine Auslenkung einer Führungsflächen am Modellzahnstumpf ausbildenden Seitenwand eines Sockelabschnittes zugelassen wird, also die gegenseitige Verriegelung der beiden Sockelabschnitte aufgehoben wird.

Dabei können die beiden Sockelabschnitte erst nach der vollständigen Aushärtung des Modellwerkstoffes bzw. erst nach dem Sägen des Modellzahnbogens und dem Zurücksetzen der Modellzahstümpfe miteinander verriegelt werden. Der Modellwerkstoff wird also in den entriegelten Sockel eingefüllt und die beiden Sockelabschnitte werden nur zur Ausarbeitung des Zahnersatzteiles verriegelt.

Bei einem anderen Verfahren wird der Modellwerkstoff in den verriegelten Sockel eingefüllt und diese Verriegelung wird nach dem Erstarren des Modellwerkstoffes gelöst. Dabei kann der Zahnbogen nach dem Erstarren aus dem Sockel entnommen und erst nach vollständiger Aushärtung zurückgesetzt werden. Der Modellwerkstoff kann aber auch vollständig im Sockel ausgehärtet werden.

Die Erfindung und deren vorteilhafte Ausgestaltungen werden nachfolgend anhand der in der Zeichnung dargestellten Ausführungsbeispiele näher erläutert. Es zeigen:

Fig. 1 eine Ansicht auf eine erste Ausführungsform eines Sockels,

Fig. 2 einen Schnitt entlang der Schnittlinie II-II,
Fig. 3 in vergrößertem Maßstab die Einzelheit bei X,
Fig. 4 eine Spange teilweise im Schnitt,
Fig. 5 einen Schnitt entlang der Schnittlinie V-V mit verriegelter Spange,
Fig. 6 eine Ansicht auf eine zweite Ausführungsform eines Sockels,
Fig. 7 eine Ansicht auf eine dritte Ausführungsform,
Fig. 8 eine Rückansicht auf eine seriennahe Sockelplatte,
Fig. 9 Seitenansichten einer Spange,
Fig. 10 einen Nutausschnitt in vergrößerter Darstellung,
Fig. 11 einen Querschnitt durch den Sockel nach Fig. 8,
Fig. 12 in vergrößerter Darstellung eine Einzelheit der Spange und
Fig. 13 eine Seitenansicht auf die Spange.

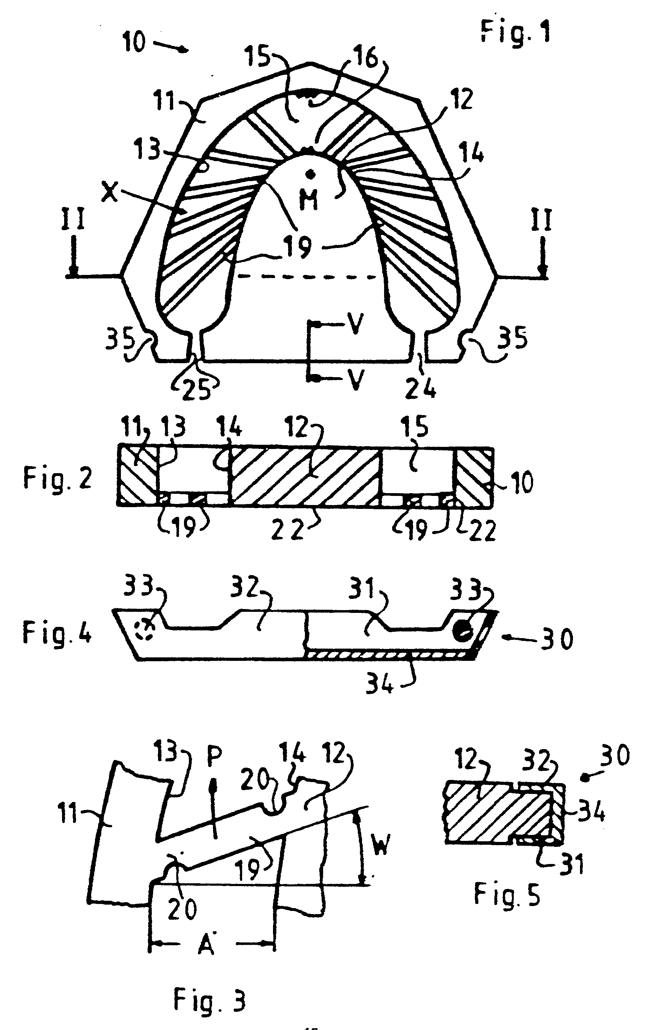

Der Sockel 10 nach Fig. 1 besteht aus zwei Sockelabschnitten 11 und 12 mit Seitenwänden 13 und 14, die seitlich eine einem Zahnbogen angepaßte Nut 15 begrenzen. Die Seitenwände sind in bekannter Weise mit Vorsprüngen und Riefen 16 versehen, die aus Gründen der Übersichtlichkeit nur teilweise angedeutet sind. Diese Seitenwände 13 und 14 bilden während der Aushärtung des in die Nut 15 eingefüllten Modellwerkstoffes an Führungsansätzen der einzelnen Modellzahnstümpfe entsprechende Führungsflächen aus, wobei mittels der Retentionen 16 sichergestellt wird, daß diese aus dem Zahnbogen herausgesägten Modellzahnstümpfe später nur in der ursprünglichen Position in die Nut bzw. den Sockel 10 zurückgesetz werden können.

Der wangenseitige Sockelabschnitt 11 ist mit dem zungenseitigen Sockelabschnitt 12 über Verbindungselemente in Form schmaler Stege 19 verbunden, die eine Abstandsveränderung zwischen wangenseitigem Sockelabschnitt 11 und zungenseitigem Sockelabschnitt 12 zulassen. Aus den Fig. 1 und 3 ist ersichtlich, daß diese Stege 19 unter einem Winkel W ungleich 90 Grad einstückig sowohl an dem wangenseitigen Sockelabschnitt 11 als auch an dem zungenseitigen Sockelabschnitt 12 angelenkt sind. Nahe dem Übergang in die Seitenwände 13 und 14 haben diese Stege 19 einen verminderten Querschnitt, sodaß an diesen Stellen ein Filmscharniergelenk 20 gebildet ist. Diese Querschnittsverengungen sind in den Sockelansichten aus Gründen der Übersichtlichkeit nicht eingezeichnet. Sie könnten ggf. auch entfallen, wenn diese Stege nur einen kleinen Querschnitt aufweisen und ein geeigneter Werkstoff verwendet wird.

Bei dem Ausführungsbeispiel nach Fig. 1 sind alle Stege 19 auf einen gemeinsamen Punkt M ausgerichtet, der in der Mitte kurz hinter beiden Schneidezähnen liegt. Fig. 2 zeigt, daß diese verhältnismäßig dünnwandigen Stege 19 bündig mit den unteren, in einer Ebene liegenden Grundflächen 22 der beiden Sockelabschnitte abschließen.

Von der bekannten Ausführung unterscheidet sich der Sockel nach Fig. 1 auch dadurch, daß die beiden Sockelabschnitte im Backenzahnbereich nicht miteinander verbunden sind. Vielmehr ist links und rechts jeweils ein Spalt 24 vorgesehen und die seitlich des Spaltes 24 liegenden Bereiche 25 am wangenseitigen bzw. zungenseitigen Sockelabschnitt bilden Anschläge, die als Distanzelemente dienen können und die Mindestbreite der Nut 15 bzw. den Mindestabstand A zwischen den beiden Seitenwänden 13 und 14 bestimmen.

Wesentlich für die vorliegende Erfindung ist nun, daß aufgrund dieser Ausbildung des Sockels 10 der wangenseitige Sockelabschnitt 11 bzw. dessen Seitenwand 13 nach außen ausfedern kann. Dabei wird der Mindestabstand A zunächst auch durch die Ausrichtung der Stege 19 bestimmt, die also ebenfalls die Funktion von Distanzelementen übernehmen.

Expandiert nun der in die Nut 15 eingefüllte Modellwerkstoff, wirken Kräfte auch quer zur Zahnbogenlängsrichtung und durch diese Kräfte wird der Abstand A zwischen den Seitenwänden 13 und 14 durch Auslenkung der Stege 19 in Pfeilrichtung P vergrößert, wobei die Stege 19 einer Abstandsvergrößerung elastisch entgegenwirken. Die Abstandsveränderung ist möglich, weil sich der Winkel W der Stege 19 ändern kann, die ursprünglich die Nut 15 nicht - wie bei der bekannten Ausführung - auf dem kürzesten Weg überbrücken. Diese Winkeländerung ist wegen des Filmscharniergelenks an den Stegen ohne weiteres möglich. Der maximale Abstand zwischen den Seitenwänden 13 und 14 ist erreicht, wenn diese Stege 19 senkrecht zu den Seitenwänden ausgerichtet sind. Dieser Zustand wird aber normalerweise nicht erreicht.

Die Elastizität der Stegverbindung ist durch geeignete Dimensionierung der Filmscharniergelenke so gewählt, daß sich der Sockel 10 bzw. die Nut 15 bei der Expansion des Modellwerkstoffes der dabei auftretenden Querschnittsveränderung anpassen kann. Dabei reicht in der Regel die von diesen Stegen 19 nach der Auslenkung aufgebrachte Rückstellkraft nicht aus, später die in die Nut 15 eingesetzten Modellzahnstümpfe sicher zu halten. Deshalb ist eine Verriegelung zwischen dem wangenseitigen Sockelabschnitt 11 und dem zungenseitigen Sockelabschnitt 12 vorgesehen. Dazu dient die in Fig. 4 dargestellte, im Querschnitt U-förmige Spange 30, die aus zwei im Abstand voneinander parallel angeordneten Brücken 31 und 32 besteht, die nahe den Enden über senkrecht stehende Rastbolzen 33 und außerdem über einen Quersteg 34 miteinander verbunden sind. An den freien Enden des wangenseitigen Sockelabschnittes 11 sind Rastaufnahmen 35 eingearbeitet, in die diese Rastbolzen 33 einrastbar sind.

Fig. 5 verdeutlicht, daß die Außenflächen dieser Brücken 31 und 32, die die einander gegenüberliegenden Grundflächen der Sockelabschnitte 11 und 12 passend übergreifen und damit für eine gegenseitige Ausrichtung sorgen, bündig mit den Grundflächen der Sockelabschnitte 11, 12 abschließen. Wird diese Spange 30 mit den Rastbolzen 33 in die Rastaufnahmen 35 eingerastet, wirkt die Spannkraft dieser Spange 30 auf die freien Enden des wangenseitigen Sockelabschnittes 11 und verspannt also diese freien Enden gegeneinander. Dadurch wird ein gleichmäßiger Zug über den gesamten Umfang des wangenseitigen Sockelabschnittes ausgeübt, der die ausgehärteten, später in die Nut 15 zurückgesetzten Modellzahnstümpfe sicher fixiert.

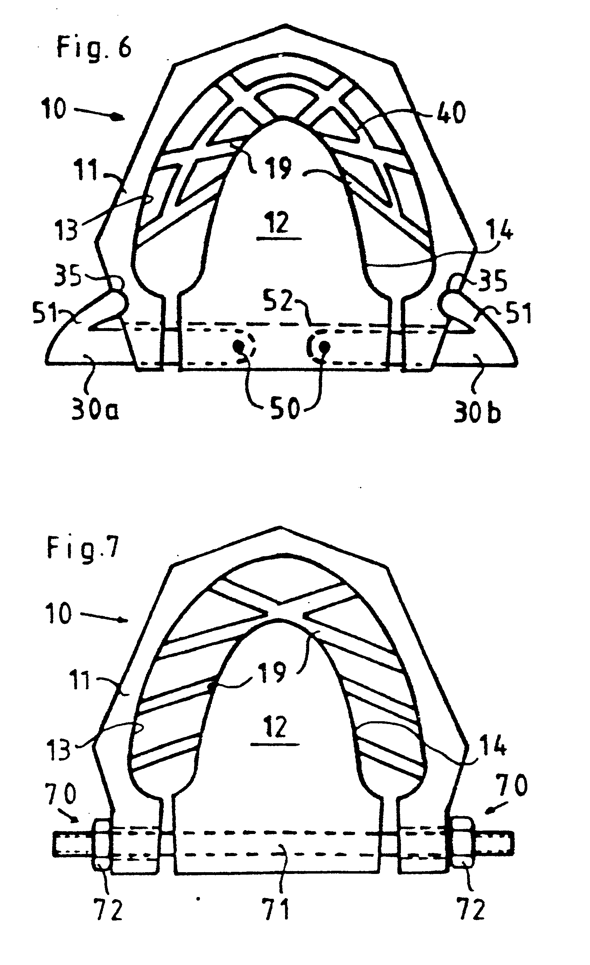

Fig. 6 zeigt eine zweite Ausführungsform eines Sockels 10, bei der eine andere Anordnung der Stege 19 gewählt wurde. Einige dieser Stege 19 sind durch einen in der Mitte längs der Nut 15 verlaufenden Versteifungssteg 40 miteinander verbunden. Außerdem sind bei dieser Ausführungsform zwei Spangen 30a, 30b vorgesehen, die die freien Enden des wangenseitigen Sockelabschnittes 11 jeweils gegen den zungenseitigen Sockelabschnitt spannen. Diese beiden Spangen 30a, 30b sind an Gelenkachsen 50 am zungenseitigen Sockelabschnitt 12 angelenkt und können mit einem Ausleger 51 den wangenseitigen Sockelabschnitt 11 umgreifen und jeweils in die Rastaufnahme 35 einfedern. Dabei ist in die Rückseite der Sockelabschnitte eine gestrichelt angedeutete Führungsnut 52 eingearbeitet, deren Höhe der Dicke dieser Spangen 30a, 30b entspricht. Durch das Zusammenwirken dieser Spangen und der Führungsnut wird eine gegenseitige Ausrichtung der beiden Sockelabschnitte 11 und 12 quer zu deren Grundfläche und zusätzlich eine Versteifung dieser Teile gewährleistet.

Die beiden Spangen können natürlich auch scharnierartig auf einer Gelenkachse angelenkt sein. Dabei ist eine unlösbare, oder eine rastbare Anlenkung möglich, wobei ggf. die Spange die Gelenkachse trägt, die in eine Rastaufnahme auch am zungenseitigen Sockelabschnitt einrastbar ist. Eine solche Doppelspange kann auch einteilig ausgebildet sein, in dem beide Spangen über ein Filmscharniergelenk miteinander verbunden werden.

Fig. 7 zeigt schließlich eine weitere Ausführungsform der Erfindung, bei der anstelle einer Spange eine Schraubverbindung 70 zur Verriegelung der Sockelabschnitte dient. Parallel zur Rückfläche des Sockels 10 ist eine fluchtende Bohrung in die beiden Sockelabschnitte 11 und 12 eingearbeitet. In die Bohrung im zungenseitigen Sockelabschnitt 12 ist ein die Bohrungen in den freien Enden des wangenseitigen Sockelabschnittes 11 durchsetzender und an den Enden mit einem Gewinde versehener Stift 71 eingepreßt. Auf beide Endseiten dieses Gewindestiftes 71 kann jeweils eine Mutter 72 aufgeschraubt werden, wodurch die freien Enden des wangenseitigen Sockelabschnittes 11 individuell gegen den zungenseitigen Sockelabschnitt 12 gespannt werden können. Natürlich kann man anstelle eines durchgehenden Stiftes auch zwei Stifte verwenden, die jeweils seitlich in Bohrungen im zungenseitigen Sockelabschnitt 12 eingepreßt werden. Bei einem einstückigen Stift ist auch ein Pressitz im zungenseitigen Sockelabschnitt 12 nicht notwendig, weil die freien Enden des wangenseitigen Sockelabschnittes 11 auch gegeneinander verspannt werden können.

Gewindestift und Mutter sind ebenso wie die Spange vorzugsweise aus einem Kunststoff, z. B. Polyamid hergestellt, doch kann man diese Teile auch aus einem Metall mit federelastischen Eigenschaften herstellen. Wesentlich dabei ist, daß diese Verriegelungselemente gewisse Toleranzen bei unterschiedlich starken Expansionen ausgleichen können. Dies kann durch die Elastizität des verwendeten Materials oder auch durch geeignete Ausbildung der Rastverbindung selbst erreicht werden. Bei der Schraubverbindung ist dieser Toleranzausgleich ggf. durch unterschiedliches Festziehen der Muttern möglich.

Die restlichen Figuren beziehen sich auf eine seriennahe Ausführung, mit der nach dem derzeitigen Erkenntnisstand optimale Ergebnisse erreichbar sind. Wesentlich bei dieser Ausführung ist die Ausgestaltung der Stege 19, die nun in einem mittleren Abschnitt 20a einen verminderten Querschnitt aufweisen. Bei einer solchen Ausbildung der Stege ist die erforderliche translatorische und rotatorische Bewegung der wangenseitigen Seitenwand 13 bzw. des wangenseitigen Sockelabschnittes 11 in optimaler Weise gewährleistet.

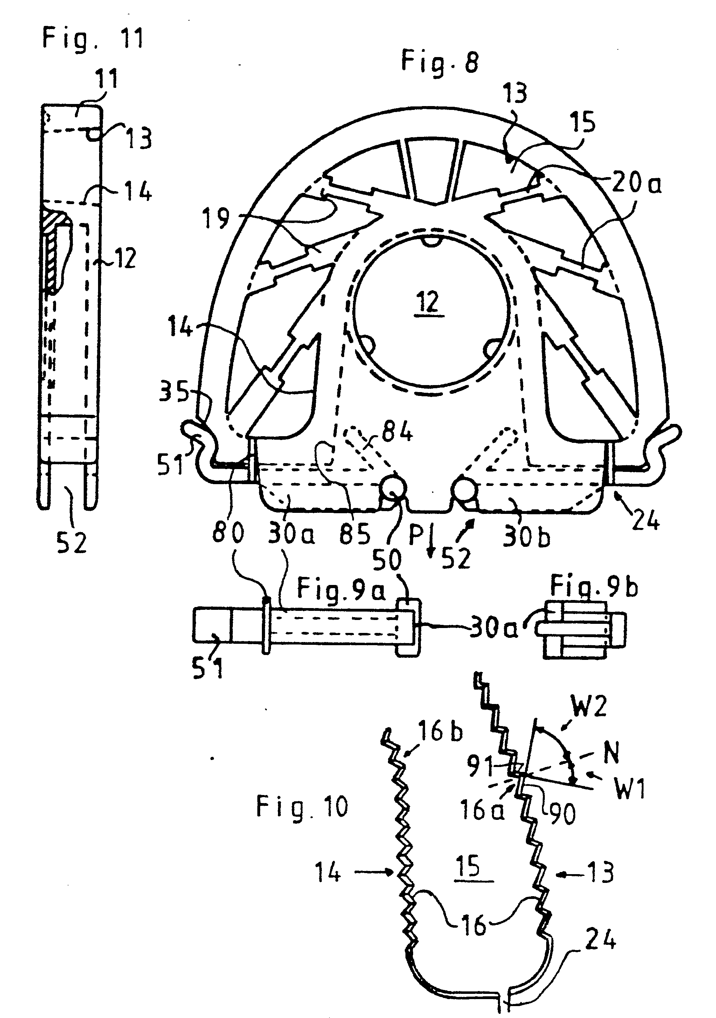

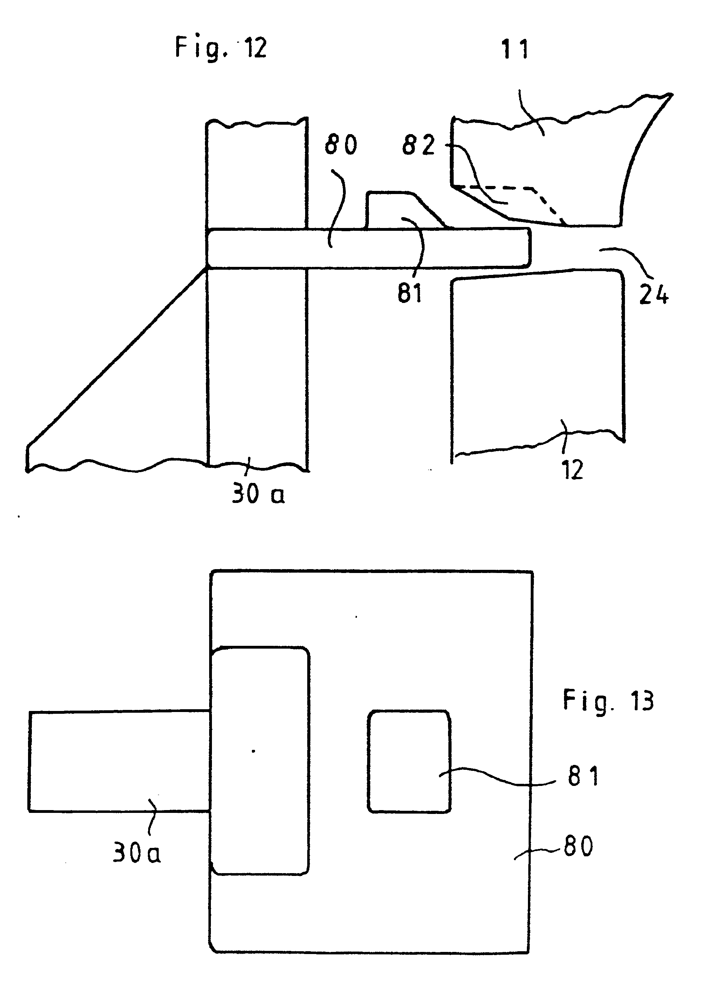

Wichtig ist auch die besondere Ausgestaltung der Spangen 30a und 30b. Man kann aus Fig. 8 entnehmen, daß diese Spangen zunächst in einer Nut 52 am zungenseitigen Sockelabschnitt 12, an dem sie mittels der Gelenkachsen 50 auch schwenkbar verrastet sind, geführt sind. An den aus dieser Nut seitlich herausragenden Abschnitt der Spange 30a ist eine Platte 80 rechtwinklig angeformt, die - was nur in den Fig. 12 und 13 dargestellt ist - einen Vorsprung 81 trägt, der in eine Aussparung 82 am wangenseitigen Sockelabschnitt 11 eingeführt werden kann. Diese Aussparung oder Nut 82 verläuft parallel zur Grundfläche der Sockelplatte. Auf diese Weise wird also die Ausrichtung der beiden Sockelabschnitte quer zur Grundfläche gesichert. Dabei füllt die Platte 80 den Spalt 24 zwischen den beiden Sockelabschnitten 11 und 12 aus und schließt damit in Umfangsrichtung die Nut 15, sodaß hier kein Modellwerkstoff austreten kann. In Fig. 8 ist noch angedeutet, daß die Spange 30a, 30b einen abstehenden, vorzugsweise federelastischen Anschlag 84 derart aufweist, daß nach einer Montage der Spange in deren Längsrichtung und nachfolgendem Verschwenken in die Betriebsstellung ein Zurückschwenken der Spange in die Montagestellung erschwert wird. Dieser Anschlag 84 schlägt nämlich an einer in Fig. 8 gestrichelt eingezeichneten Wand 85 der teilweise hohlen Sockelplatte an und die Spange kann daher nicht mehr in Richtung des Pfeiles P zurückverschwenkt werden und damit nicht mehr ohne erhöhten Kraftaufwand bzw. zerstörungsfrei von dem Sockelplattenabschnitt 12 gelöst werden.

Fig. 10 soll in vergrößertem Maßstab vor allem die Ausbildung der Retentionen oder Vorsprünge 16 an der wangenseitigen Seitenwand 13 zeigen. Man erkennt aus der Zeichnung, daß die beiden Wandabschnitte 90, 91 eines Vorsprunges 16a an der wangenseitigen Seitenwand 13 mit einer gedachten Normalen N auf die Seitenwand ungleiche Winkel W1 bzw. W2 einschließen. Der Winkel W2 zwischen der Normalen N und dem zum Backenzahnbereich gerichteten Wandabschnitt 90 ist dabei größer als der Winkel W1, den der andere Wandabschnitt 91 des Vorsprunges 16a mit der Normalen N einschließt. Der eine Winkel W2 liegt im Bereich zwischen 50 und 70 Grad, vorzugsweise bei 60 Grad liegt, während der kleinere Winkel W1 im Bereich zwischen 25 und 35, vorzugweise bei 30 Grad liegt. Da sich die Richtung der Normalen N ändert, wird sich längs der Seitenwand 13 auch die Form bzw. Ausrichtung der Vorsprunge 16 ändern. Die Vorsprünge an der inneren bzw. zungenseitigen Seitenwand 14 haben im wesentlichen symmetrisch zur Normalen ausgerichtete Wandabschnitte. Dies bedeutet auch, daß die Querschnittsform der Vorsprünge 16a an der Seitenwand 13 am wangenseitigen Sockelabschnitt 11 vom Querschnitt der Vorsprünge 16b an der Seitenwand 14 am zungenseitigen Sockelabschnitt 12 zumindest abschnittsweise abweicht.

Schließlich soll zu dieser seriennahen Ausführung noch darauf hingewiesen werden, daß die gedachten Verlängerungen der Stege in zwei unterschiedlichen Punkten auf der Mittelebene zusammenlaufen. Aufgrund dieser Dimensionierung, die auf den Querschnitt der Stege, auf deren Verteilung längs des Zahnbogens und auf Ort und Länge der Querschnittsverengung abgestimmt ist, werden die gewünschten Bewegungsabläufe erreicht, auf die schließlich auch die Querschnittsform der Vorsprünge bzw. Retentionen abgestimmt ist.

Im folgenden wird noch auf einige Abwandlungen hingewiesen, die in den Zeichnungen nicht in allen Einzelheiten dargestellt sind. Die Stege könnten beispielsweise zumindest teilweise parallel zueinander ausgerichtet sein. Der zentrale Punkt aller Stege könnte auch im Bereich der Nut liegen, also ausgehend von der Ausführung nach Fig. 1 nach oben verlegt werden. Man könnte die Stege auch in sich federelastisch aus einem geeigneten Werkstoff, etwa Metall ausbilden. Diese Stege könnten beispielsweise auch zickzackförmig die Nut überbrücken. In den Zeichnungen sind jeweils nur eine geringe Anzahl von Stegen dargestellt. Man kann jedoch auch eine solche Anzahl von Stegen vorsehen oder die Stege entsprechend breit ausbilden, daß diese Stege vorzugsweise die Hälfte der Nutgrundfläche bedecken. Dadurch würde die Stabilität des Sockels erhöht. Die Stege könnten auch unterhalb der unteren Grundfläche der beiden Sockelabschnitte liegen, jedoch wird man eine Ausführung bevorzugen, bei der diese Stege in den aushärtenden Modellwerkstoff eintauchen und damit zusätzlich einen Beitrag zur Führung und Lagesicherung der einzelnen Zahnstümpfe leisten. Man kann durch Einlage einer die Nutgrundfläche bildenden Folie sicherstellen, daß der Modellwerkstoff nicht zwischen die Stege läuft und deren Schwenkbarkeit beeinträchtigt.

In den Zeichnungen sind nur Ausführungsbeispiele dargestellt, bei denen der wangenseitige Sockelabschnitt einstückig ausgebildet ist. Dieser Sockelabschnitt könnte auch mehrteilig, insbesondere im Frontzahnbereich geteilt ausgebildet sein. Dann könnte die Spange auch vom Frontzahnbereich her angesetzt werden. Anstelle der Spange könnte auch ein umlaufendes, in einer Nut geführtes Spannband verwendet werden. Dies wäre insbesondere bei einem mehrfach geteilten wangenseitigen Sockelabschnitt vorteilhaft.

Der gesamte Sockel wird vorzugsweise einstückig aus Kunststoff gespritzt. Er kann aber auch aus Mineralglas hergestellt werden. Beim Spritzen des Sockels wird man auf möglicst gleichmäßige Wandstärken achten.

Natürlich wird man in bekannter Weise an dem Sockel sogennante Splitcast-Rippen vorsehen, die radial von einem Mittelpunkt ausgehen. In diesem Mittelpunkt kann eine Bohrung für den Zapfen einer Magnethaftscheibe angebracht sein

Zur Herstellung des Gebißmodells geht man folgendermaßen vor: Der Sockel wird auf eine ebene Unterlage gestellt oder von unten z. B. mit einer Selbstklebefolie verschlosen. Dann wird die Nut mit einem Modellwerkstoff, vorzugsweise Gips gefüllt. Der ebenfalls mit Gips gefüllte Gebißabdruck wird umgekehrt auf den Sockel aufgesetzt und sachgerecht ausgerichtet. In dieser Phase können die Sockelabschnitte miteinander verriegelt sein. Sobald der Gips abgebunden hat, was nach ca. 15 bis 20 Min. der Fall ist, wird die Verriegelung gelöst. Der Modellwerkstoff expandiert nun während der längerdauernden Aushärtung, wobei sich die Sockelform dieser Expansion anpaßt. Danach wird der Zahnbogen aus dem Sockel entnommen und zersägt, wodurch die lineare expansion in Zahnbogenlängsrichtung aufgefangen wird. Man wird dazu den Zahnbogen in möglichst viele Einzelsegmente zerlegen, auch wenn nicht alle Modellstümpfe präpariert werden sollen. Die einzelnen Zahnstümpfe werden dann wieder lagerichtig in die Nut zurückgesetzt und der Sockel bzw.

die beiden Sockelabschnitte werden miteinander verriegelt. Anschließend wird in bekannter Weise das Modell ausgearbeitet, wozu es meit in einen Artikulator eingespannt wird.

Das Verfahren kann aber auch in der Weise durchgeführt werden, daß eine Verriegelung der Sockelabschnitte erst nach der Gipserstarrung oder dem Zurücksetzen der Zahnstümpfe vorgenommen wird.

abschließend seien nochmals die wesentlichen Punkte der vorliegenden Erfindung kurz zusammengefaßt. Durch die mögliche Auslenkung einer Seitenwand bzw. eines Sockelabschnittes kann sich der Sockel der unvermeidbaren Expansion des Modellwerkstoffes anpassen. Durch die spätere verriegelung bzw. Verblockung der Sockelabschnitte ist aber dennoch eine ausreichende Stabilität gewährleistet. Etwaige Lageveschiebungen zwischen den Sockelabschnitten werden durch Führungen ausgeglichen. Dies gilt auch bezüglich einer nicht völlig ausgeschlossenen Kipp- oder Rotationsbewegung des wangenseitigen Sockelabschnittes. Insgesamt werden damit die bei bekannten Ausführungen nicht ausgeschlossenen Fehler in der Höhenbeziehung zwischen den einzelnen Zahnstümpfen sicher und mit einfachen Mitteln vermieden. Man erreicht eine als absolut zu bezeichnende Präzision bei der Modellherstellung insbesondere bei Verwendung von Gips als Modellwerkstoff. Der Sockel kann natürlich auch bei Modellen aus einem Kunststoff verwendet werden, bei denen sich die Expansion nicht so bemerkbar macht.

**Patentansprüche**

1. Sockel (10) für ein Gebißmodell zur Anfertigung von Zahnersatzteilen mit einem zungenseitigen (12) und einem wangenseitigen (11) Sockelabschnitt mit zueinander ausgerichteten Seitenwänden (13,14), die eine einem Zahnbogenabschnitt angepaßte Nut (15) seitlich begrenzen und an einem Führungsansatz eines Modellzahnstumpfes während der Aushärtung des Modellwerkstoffes jeweils zugeordnete Führungsflächen ausbilden, wobei der wangenseitige Sockelabschnitt an dem zungenseitigen Sockelabschnitt über wenigstens ein Verbindungselement (19) gehalten ist, dadurch gekennzeichnet, daß das Verbindungselement (19) eine Abstandsveränderung zwischen wangenseitiger Seitenwand (13) und zungenseitiger Seitenwand (14) zuläßt.

2. Sockel nach Anspruch 1, dadurch gekennzeichnet, daß das Verbindungselement (19) einer Abstandsvergrößerung zwischen wangenseitiger und zungenseitiger Seitenwand (13, 14) elastisch entgegenwirkt.

3. Sockel nach Anspruch 1 oder 2, dadurch gekennzeichnet, daß der Mindestabstand (A) zwischen wangenseitiger und zungenseitiger Seitenwand (13, 14) durch Distanzelemente bzw. Anschläge (25) vorgegeben ist.

4. Sockel nach Anspruch 3, dadurch gekennzeichnet, daß das Verbindungselement (19) zugleich als Distanzelement wirkt.

5. Sockel nach wenigstens einem der vorhergehenden Ansprüche, dadurch gekennzeichnet, daß das Verbindungselement als Steg (19) ausgebildet ist und unter einem Winkel (W) ungleich 90 Grad sowohl an den wangenseitigen als auch an den zungenseitigen Sockelabschnitt (11, 12) bzw. die zugehörige Seitenwand (13, 14) angelenkt ist.

6. Sockel nach Anspruch 5, dadurch gekennzeichnet, daß der Steg (19) einstückig vorzugsweise beidseitig über ein Filmscharniergelenk (20) an die Sockelabschnitte (11, 12) angeformt ist.

7. Sockel nach Anspruch 5, dadurch gekennzeichnet, daß der Steg (19) auf beiden Seiten einstückig an die Sockelabschnitte (11, 12) angeformt ist und vorzugsweise mittig zwischen den beiden Sockelabschnitten einen Abschnitt (20a) mit einem verminderten Querschnitt aufweist.

8. Sockel nach Anspruch 5, 6 oder 7, dadurch gekennzeichnet, daß mehrere als Stege (19) ausgebildete Verbindungselemente vorgesehen sind, die im Abstand voneinander vorzugsweise gleichmäßig verteilt angeordnet sind, und zumindest einige dieser Stege (19), vorzugsweise alle auf einen gemeinsamen Punkt (M) hin ausgerichtet sind, der in einem Bereich in der Mitte zwischen beiden Schneidezähnen, vorzugsweise hinter den Schneidezähnen liegt.

9. Sockel nach wenigstens einem der Ansprüche 1 bis 4, dadurch gekennzeichnet, daß mehrere als Stege (19) ausgebildete Verbindungselemente vorgesehen sind und diese Stege (19) zumindest teilweise parallel zueinander ausgerichtet sind.

10. Sockel nach wenigstens einem der Ansprüche 1 bis 4, dadurch gekennzeichnet, daß mehrere als Stege (19) ausgebildete Verbindungselemente vorgesehen sind, die in ihrer Längsrichtung, also quer zur Nut (15) in sich begrenzt federelastisch ausgebildet sind.

11. Sockel nach wenigstens einem der vorhergehenden Ansprüche, dadurch gekennzeichnet, daß wenigstens einzelne Stege (19) durch einen vorzugsweise in der Mitte längs der Nut (15) verlaufenden Versteifungssteg (40) miteinander verbunden sind.

12. Sockel nach wenigstens einem der vorhergehenden Ansprüche, dadurch gekennzeichnet, daß die Stege (19) vorzugsweise mehr als die Hälfte der Nutgrundfläche überdecken.

13. Sockel nach wenigstens einem der vorhergehenden Ansprüche, dadurch gekennzeichnet, daß die Stege (19) im Bereich der unteren Grundflächen (22) der beiden Sockelabschnitte (11,12) angeordnet sind und vorzugsweise bündig mit der unteren Grundfläche (22) der beiden Sockelabschnitte (11, 12) abschließen.

14. Sockel nach wenigstens einem Ansprüche 1 bis 12, dadurch gekennzeichnet, daß die Stege (19) unterhalb der unteren Grundfläche (22) der beiden Sockelabschnitte (11, 12) liegen.

15. Sockel nach Anspruch 13 oder 14, dadurch gekennzeichnet, daß die Nut vor Einfüllung des Modellwerkstoffes durch eine dünne, die Nutgrundfläche bildende Folie abgeschlossen ist, die vorzugsweise auf die Stege aufgelegt ist.

16. Sockel nach wenigstens einem der vorhergehenden Ansprüchen, dadurch gekennzeichnet, daß der wangenseitige Sockelabschnitt (11) mit dem zungenseitigen Sockelabschnitt (12) verriegelbar, vorzugsweise mit ausreichender Spannkraft federelastisch verspannbar ist.

17. Sockel nach Anspruch 16, dadurch gekennzeichnet, daß über eine Spange (30) oder eine Schraubverbindung (70) die freien Enden des wangenseitigen Sockelabschnittes (11) gegeneinander oder über jeweils eine Spange (30a, 30b) oder Schraubverbindung gegen den zungenseitigen Sockelabschnitt (12) spannbar sind, wobei die beiden Spangen ggf. gelenkig miteinander verbunden sind.

18. Sockel nach Anspruch 16, dadurch gekennzeichnet, daß zwischen dem zungenseitigen Sockelabschnitt (12) und den freien Enden des wangenseitigen Sockelabschnittes (11) jeweils eine die Sockelabschnitte gegeneinander spannende Spange (30a, 30b) vorgesehen ist, wobei die beiden Spangen (30a, 30b) vorzugsweise jeweils einseitig am zungenseitigen Sockelabschnitt (12) angelenkt sind.

19. Sockel nach Anspruch 16, dadurch gekennzeichnet, daß der wangenseitige Sockelabschnitt vorzugweise im Frontzahnbereich zweigeteilt, ggf. aber auch mehrfach geteilt ist und jeder Teilbereich mit dem benachbarten Teilbereich mittels einer Spange oder einem um den wangenseitigen Sockelabschnitt umlaufenden Spannband gegeneinander verspannbar ist.

20. Sockel nach wenigstens einem der Ansprüche 16 bis 19, dadurch gekennzeichnet, daß die Spange (30, 30a, 30b) wenigstens einseitig in einem Sockelabschnitt (11, 12), vorzugsweise dem zungenseitigen Sockelabschnitt (11) einrastbar ist.

21. Sockel nach Anspruch 20, dadurch gekennzeichnet, daß die Spange (30) wenigstens einen von einer Brücke (31, 32) senkrecht abstehenden Rastbolzen (33) aufweist, der in eine angepaßte Rastaufnahme (35) an einem Sockelabschnitt (11, 12), vorzugsweise dem zungenseitigen Sockelabschnitt (11) einrastbar ist.

22. Sockel nach wenigstens einem der vorhergehenden Ansprüche, dadurch gekennzeichnet, daß Mittel zur gegenseitigen Ausrichtung der beiden Sockelabschnitte (11, 12) quer zu ihrer Grundfläche (22) vorgesehen sind und dazu vorzugsweise die Spange, das Spannband oder die Schraubverbindung ausgenutzt wird.

23. Sockel nach Anspruch 22, dadurch gekennzeichnet, daß die Spange (30) zwei über den oder die Rastbolzen (33) oder einen Quersteg (34) miteinander verbundene Brücken (31, 32) aufweist, die die einander gegenüberliegenden Grundflächen der beiden Sockelabschnitte (11, 12) passend übergreifen, wobei die Außenflächen der Brücken vorzugsweise bündig mit den Grundflächen (22) der Sockelabschnitte (11, 12) abschließen.

24. Sockel nach Anspruch 22, dadurch gekennzeichnet, daß die Spange (30a, 30b) bzw. das Spannband passend in eine Nut (52) in der Außenwand in wenigstens einem der beiden Sockelabschnitte (11, 12), vorzugsweise im zungenseitigen Sockelabschnitt (12) eingreift und auch im anderen Sockelabschnitt in einer Richtung quer zur Grundfläche abgestützt ist.

25. Sockel nach Anspruch 24, dadurch gekennzeichnet, daß an der Spange (30a, 30b) ein Vorsprung (81) angeordnet ist, der in eine parallel zur Grundfläche ausgerichtete Aussparung oder Nut (82) am anderen Sockelabschnitt, vorzugsweise am wangenseitigen Sockelabschnitt (11) passend eingreift.

26. Sockel nach Anspruch 25, dadurch gekennzeichnet, daß der Vorsprung (81) an einer Platte (80) angeordnet ist, die im wesentlichen senkrecht zur Längsrichtung der Spange (30a, 30b) von dieser absteht und vorzugsweise in einen Spalt (24) zwischen den beiden Sockelabschnitten (11, 12) hineinragt und diesen Spalt (24) ausfüllt.

27. Sockel nach wenigstens einem der Ansprüche 18 bis 26, dadurch gekennzeichnet, daß die Spange (30a, 30b) einen abstehenden, vorzugweise federelastischen Anschlag (84) derart aufweist, daß nach einer Montage der Spange in deren Längsrichtung und nachfolgendem Verschwenken in die Betriebsstellung ein Zurückschwenden der Spange in die Montagestellung erschwert wird.

28. Sockel nach Anspruch 16, dadurch gekennzeichnet, daß die gegenseitige Verriegelung zwischen den beiden Sockelabschnitten durch eine wannenartige Form bewerkstelligt wird, in die der Sockel derart einsetzbar ist, daß die Außenwand des wangenseitigen Sockelabschnittes an der Seitenwand der Form anliegt.

29. Sockel nach wenigstens einem der vorhergehenden Ansprüche, dadurch gekennzeichnet, daß die beiden einander zugewandten Seitenwände (13, 14) der beiden Sockelabschnitte (11, 12) Vorspünge bzw. Riefen (16) aufweisen, wobei der Querschnitt der Vorspünge (16a) an der Seitenwand (13) am wangenseitigen Sockelabschnitt (11) vom Querschnitt der Vorsprünge (16b) an der Seitenwand (14) am zungenseitigen Sockelabschnitt (12) zumindest abschnittsweise abweicht, wobei die beiden Wandabschnitte (90, 91) eines Vorsprunges (16a) an der wangenseitigen Seitenwand (13) mit einer gedachten Normalen (N) auf die Seitenwand ungleiche Winkel (W1, W2) einschließen und dabei der Winkel (W2) zwischen der Normalen (N) und dem zum Backenzahnbereich gerichteten Wandabschnitt (90) größer ist als der Winkel (W1), den der andere Wandabschnitt (91) des Vorsprunges (16a) mit der Normalen (N) einschließt, und wobei der eine Winkel (W2) im Bereich zwischen 50 und 70 Grad, vorzugsweise bei 60 Grad liegt, während der kleinere Winkel (W1) im Bereich zwischen 25 und 35, vorzugsweise bei 30 Grad liegt.

30. Sockel nach wenigstens einem der vorherigen Ansprüche, dadurch gekennzeichnet, daß er aus Kunststoff oder Mineralglas hergestellt ist und die Seitenwände (13, 14) der Sockelabschnitte (11, 12) - abgesehen von der für das Spritzen notwendigen Verformungsschräge - vorzugweise parallel zueinander ausgerichtet sind.

31. Verfahren zur Herstellung eines Gebißmodells unter Verwendung eines Sockels gemäß wenigstens einem der vorhergehenden Ansprüche, wobei Modellwerkstoff in einen Sockel mit zwei Sockelabschnitten eingefüllt wird, deren Seitenwände während der Aushärtung des Modellwerkstoffes Führungsflächen an einem Führungsansatz eines Modellzahnstumpfes ausbilden, dadurch gekennzeichnet, daß wenigstens während eines bestimmten Zeitabschnittes während der Aushärtdauer des Modellwerkstoffes eine Auslenkung einer Seitenwand eines Sockelabschnittes zugelassen wird.

32. Verfahren nach Anspruch 31, dadurch gekennzeichnet, daß die beiden Sockelabschnitte nur zur Ausarbeitung des Zahnersatzteiles miteinander verriegelt werden.

33. Verfahren nach Anspruch 31, dadurch gekennzeichnet, daß die beiden Sockelabschnitte während des Einfüllens des Modellwerkstoffes miteinander verriegelt sind und diese Verriegelung spätestens nach dem Erstarren des Modellwerkstoffes gelöst wird.

34. Verfahren nach wenigstens einem der Ansprüche 31 bis 33, dadurch gekennzeichnet, daß das Gebißmodell nach dem Erstarren des Modellwerkstoffes zur Aushärtung des Modellwerkstoffes aus dem Sockel entnommen wird.

**Revendications**

1. Socle pour moulage de prothèse dentaire destiné à la confection de dents artificielles comportant une section de socle côté langue et une section de socle côté joue avec des parois latérales en regard l'une de l'autre, qui délimitent latéralement une gorge adaptée à une section d'arcade dentaire et forment, sur un appendice de guidage d'un tronçon de dent de la prothèse pendant le durcissement de la matière, des faces de guidage respectives, la section de socle côté joue étant maintenue sur la section de socle côté langue par l'intermédiaire d'au moins un élément de liaison, caractérisé en ce que l'élément de liaison 19 autorise une modification de l'espacement entre la paroi latérale côté joue (13) et la paroi latérale côté langue (14).

2. Socle selon la revendication 1, caractérisé en ce que l'élément de liaison (19) s'oppose élastiquement à un accroissement de l'espacement entre la paroi latérale côté joue et la paroi latérale côté langue (13, 14).

3. Socle selon la revendication 1 ou 2, caractérisé en ce que l'espacement minimum (A) entre la paroi latérale côté joue et la paroi latérale côté langue (13, 14) est prédéterminé par des éléments d'entretoise ou butées (25).

4. Socle selon la revendication 3, caractérisé en ce que l'élément de liaison (19) sert simultanément d'élément d'entretoise.

5. Socle selon au moins l'une des revendications précédentes, caractérisé en ce que l'élément de liaison sert d'âme ou armature (19) et est raccordé en articulation selon un angle (W) non égal à 90° aussi bien à la section de socle côté joue qu'à la section de socle côté langue (11, 12) ou la paroi latérale correspondante (13, 14).

6. Socle selon la revendication 5, caractérisé en ce que l'âme ou armature (19) est de préférence formée d'une seule pièce des deux côtés par l'intermédiaire d'une articulation à charnière pelliculaire (20) sur les sections de socle (11, 12).

7. Socle selon la revendication 5, caractérisé en ce que l'âme ou armature (19) est formée d'une seule pièce des deux côtés sur les sections de socle (11, 12) et présente de préférence en position médiane entre les deux sections de socle une portion (20a) de section transversale réduite.

8. Socle selon les revendications 5, 6 ou 7, caractérisé en ce que sont prévus plusieurs éléments de liaison conçus sous forme d'armatures (19), lesquels sont de préférence agencés selon un certain espacement, de préférence uniforme, et au moins plusieurs de ces armatures (19), de préférence toutes les armatures sont dirigées vers un point commun (M), qui se situe dans une zone médiane entre les deux incisives, de préférence derrière les incisives.

9. Socle selon au moins l'une des revendications 1 à 4, caractérisé en ce que sont prévus plusieurs éléments de liaison conçus sous forme d'armatures (19) et en ce que ces armatures (19) sont au moins partiellement agencées parallèlement entre elles.

10. Socle selon au moins l'une des revendications 1 à 4, caractérisé en ce que sont prévus plusieurs éléments de liaison, conçus sous forme d'armatures (19) qui dans leur direction longitudinale, c'est-à-dire délimités transversalement par rapport à la gorge (15) sont conçus en déformation élastique.

11. Socle selon au moins l'une des revendications précédentes, caractérisé en ce qu'au moins plusieurs armatures (19) sont reliées par une pièce de renforcement (40) s'étendant de préférence centralement le long de la gorge (15).

12. Socle selon au moins l'une des revendications précédentes, caractérisé en ce que les armatures (19) recouvrent de préférence plus de la moitié de la surface du fond de gorge.

13. Socle selon au moins l'une des revendications précédentes, caractérisé en ce que les armatures (19) sont agencées dans la zone des surfaces de fond inférieur (22) des deux sections de socle (11, 12) et de préférence remplissent en effleurement la surface de fond inférieur (22) des deux sections de socle (11, 12).

14. Socle selon au moins l'une des revendications 1 à 12, caractérisé en ce que les armatures (19) se situent au-dessous de la surface de fond inférieur (22) des deux sections de socle (11, 12).

15. Socle selon la revendication 13 ou 14, caractérisé en ce que la gorge est obturée avant remplissage de la matière par une feuille mince formant la surface du fond de gorge, laquelle de préférence repose sur les armatures.

16. Socle selon au moins l'une des revendications précédentes, caractérisé en ce que la section de socle côté joue (11) peut être tendue de façon verrouillable avec la section de socle côté langue (12), de préférence avec une force de tension suffisante et ce par déformation élastique.

17. Socle selon la revendication 16, caractérisé en ce que les extrémités libres de la section de socle côté joue (11) peuvent être tendues par l'intermédiaire d'une agrafe ou attache (30) ou d'un raccord vissé (70) ou par l'intermédiaire respectivement d'une agrafe (30a, 30b) ou d'un raccord vissé contre la section de socle côté langue (12), les deux broches étant raccordées entre elles de façon articulée.

18. Socle selon la revendication 16, caractérisé en ce qu'entre la section de socle côté langue (12) et les extrémités libres de le section de socle côté joue (11) est respectivement prévue une agrafe (30a, 30b) bridant les sections de socles entre elles, les deux broches (30a, 30b) étant de préférence articulées respectivement sur un côté à le section de socle côté langue (12).

19. Socle selon la revendication 16, caractérisé en ce que le section de socle côté joue est de préférence divisée en deux parties dans la zone des dents frontales, éventuellement toutefois également en plusieurs parties et chaque zone partielle étant bridée à la zone partielle voisine au moyen d'une agrafe ou d'une bande de serrage ou collier de fixation autour de la section de socle côté joue.

20. Socle selon au moins l'une des revendications 16 à 19, caractérisé en ce que l'agrafe (30, 30a, 30b) au moins sur un côté peut s'encliqueter dans une section de socle (11, 12) de préférence dans la section de socle côté langue (11).

21. Socle selon la revendication 20, caractérisé en ce que l'agrafe ou attache (30) présente au moins un axe d'encliquetage (33) faisant saillie verticalement par rapport à un pont (31, 32), pouvant s'encliqueter dans un logement (35) sur une section de socle (11, 12), de préférence sur la section de socle côté langue (11).

22. Socle selon au moins l'une des revendications précédentes, caractérisé en ce que sont prévus des moyens pour l'alignement entre elles des deux sections de socle (11, 12) transversalement à leur surface de fond (22) et de préférence on utilise pour ce faire l'agrafe ou attache, la bande de serrage ou collier de fixation ou le raccord fileté.

23. Socle selon la revendication 22, caractérisé en ce que la boucle 30 présente deux ponts (31, 32) reliés entre eux par l'intermédiaire du ou des axes d'encliquetege (33) ou d'une armature transversale (34), pont qui enjambe de façon appropriée les surfaces en regard l'une de l'autre des deux sections de socle (11, 12), les faces extérieures des ponts aboutissant de préférence en affleurement avec les surfaces de base (22) des sections de socle (11, 12).

24. Socle selon la revendication 22, caractérisé en ce que l'agrafe (30a, 30b) ou la bande de serrage s'adapte dans une gorge (52) dans la paroi extérieure dans au moins l'une des deux sections de socle (11, 12) de préférence dans la section de socle (12) côté langue et également en ce qu'elle est soutenue dans l'autre section de socle dans une direction perpendiculaire à la surface de base.

25. Socle selon la revendication 24, caractérisé en ce que sur l'agrafe (30a, 30b) est agencée une saillie (81) qui s'adapte de façon appropriée dans un évidement ou gorge (82) dirigé parrallèlement par rapport à la surface de base sur l'autre section de socle, de préférence sur la section de socle côté joue (11).

26. Socle selon la revendication 25, caractérisé en ce que la saillie (81) est agencée sur une plaque (80) qui fait saillie par rapport à celle-ci sensiblenent perpendiculairement à la direction longitudinale de l'agrafe (30a, 30b) et de préférence pénètre dans une fente (24) entre les deux sections de socle (11, 12) et remplit cette fente (24).

27. Socle selon au moins une des revendications 18 à 26, caractérisé en ce que l'agrafe (30a, 30b) présente une butée (84) de préférence élastique, faisant saillie de telle manière qu'après le montage de l'agrafe dans sa direction longitudinale et un basculement subséquent dans la position d'utilisation, le basculement en arrière de l'agrafe dans la position de montage est rendu difficile.

28. Socle selon la revendication 16, caractérisé en ce que verrouillage réciproque entre les deux sections de socle est réalisé par un profilé en forme de cuvette, dans lequel le socle peut être introduit de telle manière que la paroi extérieure de le section de socle côté joue vient en butée sur la paroi latérale du profilé.

29. Socle selon au moins l'une des revendications précédentes, caractérisé en ce que les deux parois latérales en regard l'une de l'autre (13, 14) des deux sections de socle (11, 12) présentent des saillies ou stries (16), le section transversale des saillies (16a) sur la paroi latérale (13) de la section de socle côté joue (11) diffère de la section transversale des saillies (16b) sur la paroi latérale (14) de la section de socle côté langue (12) pour le moins par tronçon, les deux sections de parois (90, 91) d'une saillie (16a) de la paroi latérale côté joue (13) incluent des angles inégaux (W1, W2) avec une verticale idéale (N) sur la paroi latérale et l'angle (VW) entre la verticale (N) et la section de paroi (90) dirigée vers le région molaire étant supérieure à l'angle (W1), que renferme l'autre section de parois (91) de la saillie (16a) avec la verticale (N), et l'angle (W2) se situant dans une plage entre 50 et 70°, de préférence de 60°, tandis que le petit angle (W1) se situe dans la plage entre 25 et 35° de préférence de 30°.

30. Socle selon au moins l'une des revendications précédentes, caractérisé en ce qu'il est réalisé en une matière synthétique ou en verre minéral et en ce que les parois latérales (13, 14) des sections de socle (11, 12) - à l'exception des déformations nécessaires pour le moulage par injection - s'étendent de préférence parallèlement entre elles.

31. Procédé pour la préparation d'un moulage de prothèse dentaire en utilisant un socle selon au moins l'une des revendications précédentes, un socle comportant deux sections de socle étant rempli de la matière du moulage, les parois latérales du socle pendant le durcissement de la matière formant des surfaces de guidage sur un appendice de guidage d'un troçon de dent de la prothèse, caractérisé en ce qu'au moins pendant une durée déterminée au cours du durcissement de la matière, on procède à une déviation d'une paroi latérale d'une section de socle.

32. Procédé selon la revendication 31, caractérisé en ce que les deux sections de socle ne sont verrouillées entre elles que pour l'élaboration de la dent artificielle.

33. Procédé selon la revendication 31, caractérisé en ce que les deux sections de socle sont verrouilllées entre elles pendant le remplissage de la matière de moulage et ce verrouillage est libéré au plus tard après la solidification de la matière de moulage.

34. Procédé selon au moins l'une des revendications 31 à 33, caractérisé en ce que la prothèse d'appareil dentaire ou moulage de denture est extraite du socle après le solidification de la matière de moulage en vue de son durcissement.

## Claims

1. A supporting plate (10) for a dental model for preparation of dental prosthesis parts, consisting of a tongue-side portion (12) and a cheek-side portion (11), both having side walls (13, 14) aligned with each other; said portions define laterally a groove (15) of a shape corresponding to a tooth arch and form respective guiding surfaces on a guide abutment of a model tooth stump during the hardening of a model material, with at least one connection element (19) for holding the cheek-side plate portion on the tongue-side portion plate portion, characterized by the connection element (19) permitting a change in the distance between the side wall on the cheek side (13) and the side wall on the tongue side (14).

2. A supporting plate as defined in Claim 1, characterized by the connection element (19) elastically counteracting an increase in distance between the side wall on the cheek side and the side wall on the tongue side (13, 14).

3. A supporting plate as defined in Claim 1 or 2, characterized by the minimum distance (A) between the side wall on the cheek side and the side wall on the tongue side (13, 14) being set by spacer elements and, respectively, stops (25).

4. A supporting plate as defined in Claim 3, characterized by the connection element (19) simultaneously acting as a spacer element.

5. A supporting plate as defined in at least one of the above Claims, characterized by the connection element being formed by a web (19) and being pivotable by an angle (W) deviated from 90 ° both on the cheek-side and the tongue-side plate portion (11, 12) or, respectively, the appertaining side wall of the same (13, 14).

6. A supporting plate as defined in Claim 5, characterized by the web (19) being formed of one piece with the plate portions (11,12), preferably on both sides, via a film hinge (20).

7. A supporting plate as defined in Claim 5, characterized by the web (19) being formed of one piece with the plate portions (11, 12) on both sides and preferably having a portion (20a) with a reduced cross section positioned in the middle between the two plate portions.

8. A supporting plate as defined in Claims 5, 6 or 7, characterized by a plurality of connection elements being formed as webs (19), preferably distributed equally as regards their distances from one another, and at least some of these webs (19), preferably all of them, being oriented to a common point (M), positioned in a section in the middle between both cutting teeth, preferably behind the cutting teeth.

9. A supporting plate as defined in at least one of the Claims 1 to 4, characterized by a plurality of connection elements being provided which are formed as webs (19), said webs (19) being aligned at least partly parallel to each other.

10. A supporting plate as defined in at least one of the Claims 1 to 4, characterized by a plurality of connection elements being provided which are formed as webs (19), said webs being formed as elastic elements within themselves in a lengthwise direction, i.e. transverse to the groove (15).

11. A supporting plate as defined in at least one of the above Claims, characterized by at least some of the webs (19) being connected to each other by a reinforcing web (40) preferably extending in the middle along the groove (15).

12. A supporting plate as defined in at least one of the above Claims, characterized by the webs (19) preferably covering more than one half of the base area of the groove.

13. A supporting plate as defined in at least one of the above Claims, characterized by the webs (19) being positioned in the region of the lower base surfaces (22) of the two plate portions (11, 12) and preferably being flush with the lower base surface (22) of the two plate portions (11, 12).

14. A supporting plate as defined in at least one of the Claims 1 to 12, characterized by the webs (19) being positioned below the lower base surface (22) of the two plate portions (11, 12).

15. A supporting plate as defined in Claim 13 or 14, characterized by a thin foil closing the groove and forming the base surface of the same, said foil being applied before the filling-in of the model material and preferably being placed on the webs.

16. A supporting plate as defined in at least one of the above Claims, characterized by the cheek-side plate portion (11) having a means of being locked with the tongue-side plate portion (12), and preferably being elastically tensible with a sufficient clamping force.

17. A supporting plate as defined in Claim 16, characterized by the free ends of the cheek-side plate portion (11) being tensile via a clasp (30) or a bolt connection (70), either in relation to each other or via a clasp (30a, 30b) in relation to the tongue-side plate portion (12), with the two clasps possibly being pivotally connected to each other.

18. A supporting plate as defined in Claim 16, characterized by two clasps (30a, 30b) being provided between the tongue-side plate portion (12) and the free ends of the cheek-side plate portion (11) for locking the plate portions together, with the two clasps (30a, 30b) preferably being pivotally connected on one side to the tongue-side plate portion (12).

19. A supporting plate as defined in Claim 16, characterized by the cheek-side plate portion preferably being divided into two, or possibly more, sections in the region of the front teeth and each sub-section being tensible to its neighbouring sub-section by means of a clasp or a retaining band running around the cheek-side plate portion.

20. A supporting plate as defined in at least one of the Claims 16 to 19, characterized by the clasp (30, 30a, 30b) being capable of being engaged in a minimum of one side of a plate portion (11, 12), preferably the tongue-side plate portion (11).

21. A supporting plate as defined in Claim 20, characterized by the clasp (30) having at least one locking pin (33) projecting vertically from a bridge (31, 32) and which can be engaged in an appropriate locking recess (35) in one plate portion (11, 12), preferably the tongue-side plate portion (11).

22. A supporting plate as defined in at least one of the above Claims, characterized by a means being provided to mutually align the two plate portions (11, 12) transversally to their base surface (22) and preferably using for this purpose the clasp, the retaining band or the bolt connection.

23. A supporting plate as defined in Claim 22, characterized by the clasp (30) having two bridges (31, 32) connected by the locking pin(s) (33) or a cross piece (34) and said bridges appropriately overlapping the opposite base surfaces of the two plate portions (11, 12), with the outer surfaces of the bridges preferably fitting flush with the base surfaces (22) of the plate portions (11, 12).

24. A supporting plate as defined in Claim 22, characterized by the clasp (30a, 30b) or the retaining band engaging in a recess (52) in the outer wall of at least one of the two plate portions (11, 12), preferably in the tongue-side portion (12), and also being supported in the other plate portion in a transverse direction to the base surface.

25. A supporting plate as defined in Claim 24, characterized by the clasp (30a, 30b) having a projection (81) which engages in a recess or groove (82) in the other plate portion, running parallel to the base surface, preferably in the cheek-side plate portion (11).

26. A supporting plate as defined in Claim 25, characterized by the projection (81) being located on a plate (80) extending from the clasp (30a, 30b) substantially vertical to the lengthwise direction of the same and preferably projecting into a gap (24) between the two plate portions (11, 12) and filling said gap (24).

27. A supporting plate as defined in at least one of the Claims 18 to 26, characterized by the clasp (30a, 30b) having a projecting, preferably resilient, abutment (84) which, after the fitting of the clasp in a lengthwise direction and subsequent pivoting to an operational position, renders difficult any pivoting of the clasp back into the fitting position.

28. A supporting plate as defined in Claim 16, characterized by the reciprocal locking of the two plate portions being performed by means of a tub-shaped mold into which the supporting plate is insertable in such a way as to enable the outer wall of the cheek-side plate portion to lie against the side wall of the mold.

29. A supporting plate as defined in at least one of the above claims, characterized by the two side walls (13, 14) - which face each other - of the two plate portions (11, 12) having projections or ribs (16), with the cross-section of the projections (16a) on the side wall (13) of the cheek-side plate portion (11) differing, at least in some parts, from the cross-section of the projections (16b) on the side wall (14) of the tongue-side plate portion (12) and with the two wall portions (90, 91) of a projection (16a) on the side wall of the cheek-side portion (13) enclosing different angles (W1, W2) with a normal (N) to the side wall, making the angle (W2) between the normal (N) and the wall section facing the jaw teeth area (90) larger than the angle (W1) enclosed by the other wall section (91) of the projection (16a) and the normal (N), and with the one angle (W2) ranging between 50° and 70°, preferably about 60°, and the smaller angle (W1) ranging between 25° and 35°, preferably about 30°.

30. A supporting plate as defined in at least one of the above claims, characterized by its being made of plastic or mineral glass and the side walls (13, 14) of the plate portions (11, 12) preferably being aligned in parallel - with the exception of the deflecting slope necessary for injection.

31. Process for making a dental model using a supporting plate as defined in at least one of the above claims, with model material being filled into a supporting plate with two plate portions, the side walls of which constitute guide surfaces on a guide abutment of a model tooth stump during the hardening of said material, with the characteristic that a displacement of a side wall of a plate portion is permitted for at least a set time interval while the model material is hardening.

32. Process as defined in Claim 31, characterized by the two plate portions only being locked together for the preparation of the dental prosthesis.

33. Process as defined in Claim 31, characterized by the two plate portions being locked together while the model material is filled thereinto and said locking being released not later than after the solidification of the model material.

34. Process as defined in at least one of Claims 31 to 33, characterized by the dental model, after the model material has solidified, being removed from the supporting plate for said model material to harden.

Fig. 1

Fig. 2

Fig. 4

Fig. 3

Fig. 5

Fig. 6

Fig.7

Fig. 11

Fig. 8

Fig. 9 a

Fig. 9 b

Fig. 10

Fig. 12

Fig. 13